# EUROPÄISCHE PATENTSCHRIFT

(11) **EP 2 638 365 B1**
(45) Veröffentlichungstag und Bekanntmachung des Hinweises auf die Patenterteilung: **12.03.2014**
(21) Anmeldenummer: 11788031.0
(22) Anmeldetag: 24.10.2011
(51) Int. Cl.: G01D 5/20, G01F 23/74, G21C 7/10, G21C 17/10

(54) **STELLUNGSMESSSYSTEM ZUR ERFASSUNG EINER AUSGEZEICHNETEN POSITION EINES LINEAR BEWEGLICHEN FÜHRUNGSELEMENTES**
POSITION MEASURING SYSTEM FOR DETECTING AN INDICATED POSITION OF A LINEARLY MOVABLE GUIDE ELEMENT
SYSTÈME DE MESURE DE SITUATION POUR LA DÉTECTION D'UNE POSITION INDIQUÉE D'UN ÉLÉMENT DE GUIDAGE SE DÉPLAÇANT LINÉAIREMENT

(30) Priorität: 10.11.2010 DE 102010050765
(43) Veröffentlichungstag der Anmeldung: 18.09.2013
(73) Patentinhaber: AREVA GmbH, 91052 Erlangen (DE)
(72) Erfinder: REYMANN, Markus, 90480 Nürnberg (DE)
(74) Vertreter: Kugler, Jörg
(86) Internationale Anmeldenummer: PCT/EP2011/005349
(87) Internationale Veröffentlichungsnummer: WO 2012/062409

(56) Entgegenhaltungen:
- DE-A1- 2 202 519
- DE-A1- 4 208 888
- US-A- 3 048 818

## Beschreibung

Die Erfindung betrifft ein Stellungsmesssystem zur Erfassung einer ausgezeichneten Position, insbesondere einer maximalen und minimalen Position, eines linear beweglichen Führungselementes.

In einer kerntechnischen Anlage, beispielsweise in einer Kernkraftwerksanlage, werden linear verfahrbare Steuerstäbe verwendet, um Kettenreaktionen von Kernzerfallsprozessen in einem Reaktor, bei denen Teilchenstrahlung - insbesondere Neutronenstrahlung - emittiert wird, durch Absorption der Strahlung zu kontrollieren. Je weiter solche Steuerstäbe, die typischerweise in Gruppen gebündelt angeordnet sind, zwischen die nuklearen Brennelemente geschoben werden, desto größere Anteile der die Kettenreaktion weiter antreibenden Teilchenstrahlung werden absorbiert, so dass die Kettenreaktion entsprechend langsamer abläuft und bei voller Ausfahrposition der Steuerstäbe idealerweise zum Erliegen gebracht werden kann. Zustand und Ablauf der Kettenreaktion sind somit von den Ausfahrpositionen der linear verfahrbaren Steuerstäbe abhängig und sind durch diese bestimmt. Eine genaue Kenntnis der Positionen der Steuerstäbe-insbesondere der jeweils maximal ausgefahrenen Positionen - ist somit für eine Regelung des Betriebszustandes und somit insbesondere für die Sicherheit relevant.

Stellungsmesssysteme für Steuerstäbe umfassen in der Regel Vorrichtungen zur Anwendung elektromagnetisch induktiver Messverfahren, bei denen jeweils ausgenutzt wird, dass die zeitliche Veränderung eines Magnetfeldes in einem elektrischen Leiter eine elektrische Spannung induziert. Eine derartige Vorrichtung umfasst üblicherweise eine oder mehrere Primärspulen zur Bereitstellung eines solchen Magnetfeldes. Durch einen Steuerstab im Bereich des Magnetfeldes wird das Magnetfeld verändert, was dazu führt, dass die in entlang des linearen Verfahrweges angeordneten Induktionsspulen induzierte Spannung verändert wird. Aus der Größe der Induktionsspannung kann die Position des Steuerstabes bestimmt werden. Zur Erfassung der unteren und/oder der oberen Endstellung des Steuerstabes sind zumeist separate Spulengruppen eingerichtet, deren Messsignale über jeweils separate Leitungen zur Auswerteeinheit übertragen werden. Ein Spannungssignal von diesen Spulen gibt Aufschluss darüber, ob der Steuerstab die untere bzw. die obere Endstellung erreicht hat.

Ein Nachteil des oben dargestellten Stellungsmesssystems ist darin begründet, dass zur Erfassung der Positionen des Steuerstabes eine Mehrzahl von Sekundärspulen erforderlich ist, deren Signalleitungen aus dem inneren Reaktorbereich - dem so genannten Containment - herausgeführt werden müssen. Insbesondere die Spulen zur Erfassung der Endstellungen des Steuerstabes erfordern zusätzliche Messleitungen. Darüber hinaus ist nachteilig, dass abhängig von der tatsächlichen Position des Steuerstabes das Spannungssignal von der Induktionsspule im Umgebungsbereich der minimalen oder maximalen endseitigen Ausfahrposition des Steuerstabes kontinuierlich variiert. Damit lässt sich anhand der Größe des Spannungssignals zwar grob auf die minimale oder maximale Ausfahrposition des Steuerstabes schließen; das Signal ist aber in abgeschwächter Form immer noch vorhanden, wenn sich der Steuerstab nicht mehr in seiner minimalen oder maximalen Ausfahrposition befindet, beispielsweise dann, wenn der Steuerstab eine gewisse Wegstrecke aus dem Reaktor gezogen ist. Das induktive Messverfahren ist daher für eine präzise und eindeutige Endstellungsdetektion häufig zu ungenau.

Aufgabe der Erfindung ist es, ein Stellungsmesssystem zur Erfassung einer ausgezeichneten Position, insbesondere einer Extremalposition, eines entlang eines geradlinigen Weges bewegbaren Steuerstabes anzugeben, für welches eine möglichst geringe Anzahl von Messleitungen erforderlich ist und welches möglichst genau und zuverlässig ist. Das Stellungsmesssystem sollte sich insbesondere auf einfache Weise in bestehende induktive Stellungsmesssysteme integrieren lassen.

Die Aufgabe wird erfindungsgemäß durch die Merkmale des Anspruchs 1 gelöst.

Die Erfindung geht von der Überlegung aus, mit Hilfe eines Magnetelementes ein Magnetfeld mit dem Führstab ortsmäßig zu koppeln und mittels einer Detektion des Magnetfeldes durch ein externes, mit dem Führsystem ortsfest verbundenes Reed-Kontaktelement die entsprechende Position des Führstabes bezüglich des Führsystems zu erfassen. Insbesondere können auf diese Weise diskrete Positionswerte des Führstabes erfasst werden, beispielsweise eine Extremalposition.

Als Position des Führstabes ist die Lage eines bezüglich des Führstabes stationären Referenzpunktes definiert, wobei der Referenzpunkt bezüglich des geradlinigen Weges genau eine Ortskoordinate hat. Vorzugsweise ist der Referenzpunkt an dem Ort des Führstabes gewählt, an dem ein beliebiges, aber fest gewähltes Magnetelement angeordnet ist. Bei nur einem Magnetelement ist diese Wahl eindeutig. Die zuletzt genannte spezielle Wahl des Referenzpunktes stellt keine Beschränkung der Allgemeinheit dar. Bei einer anderen Wahl des Referenzpunktes sind die gemessenen Positionswerte im Vergleich zu den Werten bei der speziellen Wahl des Referenzpunktes um eine konstante Länge verschoben, die durch den Abstand zwischen dem Magnetelement und dem Referenzpunkt gegeben ist.

Weiterhin ist die Positionserfassung eindeutig, da das Reed-Kontaktelement dann und nur dann erfassend reagiert, wenn ein Magnetfeld im Detektionsbereich ist, dessen Feldstärke am Ort des Reed-Kontaktelementes größer ist als der Schwellwert. Bei einer Positionsveränderung des Führstabes, die größer ist als die räumliche Trennungsschärfe des Reed-Kontaktelementes, findet somit keine kontinuierliche Signalgebung des Reed-Kontaktelementes statt. Vielmehr ist eine verlässliche binäre Auskunft der Art "Endposition erreicht: ja/nein?" ermöglicht.

Sind mehrere Reed-Kontaktelemente an ein und demselben Ort des Führsystems installiert, dann ist der Redundanzgrad einer Positionserfassung entsprechend erhöht. Ein erfindungsgemäßes Stellungsmesssystem ist daher prinzipiell mit einem hohen Redundanzgrad ausführbar und ist dementsprechend zuverlässig. Dabei muss man systembedingt allerdings den Nachteil einer größeren Zahl von Leitungen in Kauf nehmen.

Darüber hinaus kann das erfindungsgemäße Stellungsmesssystem mit bekannten Systemen zur Stellungsmessung, insbesondere mit Systemen zur Anwendung induktiver Messverfahren, kombiniert werden, wobei insbesondere auf bereits bestehende Signalleitungen zurückgegriffen werden kann (Mehrfachnutzung).

Vorzugsweise ist das Magnetelement als ein Permanentmagnet ausgebildet. Für einen Permanentmagneten sind - anders als bei einer einen Elektromagneten bildenden Spule - keine elektrischen Leiter nötig, die als zusätzliche Leitungen an oder in dem Führstab und aus dem Containment herausgeführt werden müssen. Die Anzahl an möglichen zusätzlichen Leitungen, die für das Stellungsmesssystem aus dem Containment herauszuführen sind, bleibt somit auf die Sensorelemente beschränkt.

Zweckmäßigerweise ist das Magnetelement mit dem Führstab endseitig verbunden. In einer derartigen Position ist das Magnetelement besonders einfach mit dem Führstab zu verbinden und kann - beispielsweise als Permanentmagnet - in Form einer Magnetplatte oder eines Magnetkreisscheibe auf den Führstab endseitig aufgefügt sein. Darüber hinaus kann damit für ein Reed-Kontaktelement am Ort einer möglichen extremalen Auslenkung der entsprechenden Endseite des Führstabes bezüglich des Führsystems die Extremalposition des Führstabes erfasst werden.

Daher erfasst zweckdienlicherweise der Detektionsbereich mindestens eines Reed-Kontaktelementes den in der Extremalposition angeordneten Führstab endseitig.

In einer geeigneten Ausführung des Stellungsmesssystems ist der Führstab zwischen einer minimalen Ausfahrposition und einer maximalen Ausfahrposition entlang des geradlinigen Weges bewegbar. Mittels geeignet lokalisieren Sensorelementen können somit die beiden extremalen Ausfahrpositionen des Führstabes erfasst werden.

Ein Reed-Kontaktelement, welches im Rahmen der Erfindung als berührungsloser Sensor eingesetzt wird, umfasst zwei Kontaktzungen, deren Kern jeweils in der Regel aus einem ferromagnetischen Metall gebildet ist. Ein Magnetfeld im Bereich des Reed-Kontaktelementes - hervorgerufen durch den Permanentmagneten am Steuerstab-führt zu einer Anziehung der beiden Kontaktzungen. Überschreitet die Feldstärke des Magnetfeldes einen Schwellwert, so ist zwischen den beiden Kontaktzungen ein Kontaktschluss ausgebildet, so dass ein elektrischer Steuerstrom über den Kontakt fließen kann. Zur Verbesserung der Leitfähigkeit und zur Verminderung eines vorzeitigen Kontaktschlusses sind die Kontaktzungen üblicherweise mit einem Edelmetall beschichtet, beispielsweise Kupfer oder Silber, bzw. sind ein einen evakuierten oder mit Schutzgas befüllten Glaskolben eingeschlossen. Reed-Kontaktelemente sind über einen weiten Größenbereich skalierbar und sind robust und kostengünstig verfügbar.

In erfindungsgemäßer Ausführung des Stellungsmesssystems ist mindestens ein Reed-Kontaktelement mit einer elektrischen Schaltungsanordnung verbunden, welche mit einer Auswerte- und/oder Steuereinheit verbunden ist, sowie eine Anzahl von elektrischen Induktionsspulen umfasst. Die elektrische(n) Induktionsspule(n) ist bzw. sind zur Anwendung eines induktiven Messvorgangs ausgebildet. Durch die schaltungstechnische Verbindung kann die oder jede Induktionsspule mit dem Reed-Kontaktelement über ein und dieselbe Steuereinheit angesteuert und kontrolliert werden. Auf diese Weise kann ein hoher Grad an Redundanz und/oder eine hohe örtliche Auflösung der Positionsermittlung erreicht werden, ohne dass zusätzliche elektrische Leitungen aus dem Containment herausgeführt werden müssen.

Darüber hinaus umfasst die Schaltungsanordnung erfindungsgemäß mindestens eine ohmsche Widerstandseinheit, die mit mindestens einer Induktionsspule eine Reihenschaltung ausbildet, und die mit mindestens einem Kontaktsensor eine Schaltungsschleife ausbildet. Da auch die Induktionsspule einen ohmschen Widerstand aufweist, ist der Gesamtwiderstand in einer Reihenschaltung aus der ohmschen Widerstandseinheit und der Induktionsspule als die Summe beider Widerstände gegeben. Da der Kontaktsensor mit der ohmschen Widerstandseinheit eine Schaltungsschleife bildet, ist die ohmsche Widerstandseinheit bei geschlossenem Kontaktsensor überbrückt und somit kurzgeschlossen, so dass in diesem Fall in den messbaren Gesamtwiderstand nur der ohmsche Widerstand der Induktionsspule eingeht. Die Topologie der Schaltungsanordnung bildet somit eine Detektion des Kontaktsensors auf eine unstetige Widerstandsänderung ab, so dass beispielsweise das Erreichen einer Extremalposition des Führstabes anhand einer solchen sprunghaften Veränderung des Widerstandswertes erkennbar ist, eine solche kann mit einfachen Mitteln gemessen werden.

In einer besonders geeigneten Weiterbildung des Stellungsmesssystems umfasst die Schaltungsanordnung zwei ohmsche Widerstandseinheiten, die mit einer Induktionsspule eine Reihenschaltung ausbilden, wobei jeweils einer der beiden ohmschen Widerstände mit jeweils einer Endseite (Anschlussende) der Induktionsspule verbunden ist, und umfasst eine Mehrzahl von Kontaktsensoren, wobei jeder Kontaktsensor mit einem der ohmschen Widerstände eine Schaltungsschleife ausbildet. Insbesondere sind zwei Kontaktsensoren gegeben, und jeder Kontaktsensor bildet mit genau einer ohmschen Widerstandseinheit eine Schaltungsschleife aus. Eine solche Schaltungstopologie stellt einen Spezialfall der im letzten Abschnitt dargelegten Schaltungstopologie dar, die zur Identifikation zweier unterschiedlicher Sensorsignale geeignet sind, beispielsweise zum Zweck der Detektion einer Minimal- und einer Maximalposition des Führstabes. Insbesondere weisen die beiden ohmschen Widerstandseinheiten unterschiedliche ohmsche Widerstandswerte auf, so dass an der Größe der Veränderung des Gesamtwiderstandswertes erkennbar ist, welcher der beiden Kontaktsensoren einen elektrischen Kontaktschuss bildet. Sind mehr als zwei Kontaktsensoren gegeben, so existieren für zumindest eine ohmsche Widerstandseinheit mehr als eine Schaltungsschleife. Der Kurzschluss der ohmschen Widerstandseinheit erfolgt dann, wenn nur einer der Kontaktsensoren einen elektrischen Kontaktschluss ausbildet. Dies ist insbesondere zur Erhöhung des Redundanzgrades geeignet, wenn sich die Detektionsbereiche beider Kontaktsensoren überschneiden.

Darüber hinaus umfasst zweckmäßigerweise die Steuereinheit eine Stromquelle zur Einspeisung eines elektrischen Gleichstroms in die Schaltungsanordnung, und/oder umfasst eine erste Messeinheit zur Erfassung des Gleichspannungsanteils einer Gesamtspannung in der Schaltungsanordnung, und/oder umfasst eine zweite Messeinheit zur Erfassung des Wechselspannungsanteils einer Gesamtspannung in der Schaltungsanordnung. Aus der mittels der ersten Messeinheit erfassten Gleichspannung und deren zeitlichem Verlauf und aus dem in die Schaltungsanordnung eingespeisten Gleichstrom, dessen Größe bekannt ist, kann der ohmsche Widerstandswert der Schaltungsanordnung und dessen zeitlicher Verlauf ermittelt werden. Insbesondere unstetige Verläufe und somit Detektionen eines oder jedes Kontaktsensors werden somit ermittelt. Die zweite Messeinheit erfasst insbesondere eine von der Induktionsspule aus einem magnetischen Wechselfeld induzierte Wechselspannung. Dadurch kann insbesondere der zeitliche Verlauf der Amplitude der Wechselspannung ermittelt werden und somit auf eine Veränderung des induzierenden magnetischen Wechselfeldes geschlossen werden. Letzteres ist Gegenstand eines induktiven Messvorgangs.

Vorzugsweise ist die Steuereinheit mit einer zweiten Schaltungsanordnung verbunden, welche Schaltungsanordnung eine elektrische Spule umfasst, und vorzugsweise ist die Steuereinheit zur Bildung und Steuerung eines elektrischen Stromes in der zweiten Schaltungsanordnung ausgebildet. Eine derartige Schaltungsanordnung eignet sich insbesondere zur Durchführung eines induktiven Messvorgangs. Hierfür erzeugt die Steuereinheit einen elektrischen Wechselstrom, der durch die elektrische Spule (Primärspule) geführt ist und dabei ein magnetisches Wechselfeld induziert.

Des Weiteren ist vorzugsweise die elektrische Spule parallel zu dem geradlinigen Weg ausgerichtet und angeordnet. Beispielsweise kann die Spule zur Umschließung des geradlinigen Weges ausgebildet sein, womit ein durch die Spule induziertes Magnetfeld den Weg im Wesentlichen vollständig umfasst.

In einer zweckmäßigen Ausführung des Stellungsmesssystems ist der Führstab als ein Steuerstab einer kerntechnischen Anlage gegeben, und das Führsystem umfasst ein den Steuerstab umschließendes druckstabiles Führungsrohr. Ein derartiges Stellungsmesssystem dient zur - vorzugsweise redundanten - Stellungsmessung eines Steuerstabes, insbesondere zur Messung und Verifikation einer Endstellung. Zweckmäßigerweise sind im Bereich der Endstellung mehrere Reed-Kontaktelemente mit der Außenseite des Führungsrohres kontaktschlüssig verbunden, und zweckmäßigerweise umschließt die elektrische Spule das Führungsrohr. Die Position eines in dem Führungsrohr linear verfahrbaren Steuerstabes kann mittels der Steuereinheit und den Schaltungsanordnungen induktiv erfasst werden. Das Erreichen und Bestehen der Endstellung wird durch die Reed-Kontaktelemente detektiert, mittels der ersten Schaltungsanordnung gemessen und mit Hilfe der Steuereinheit ausgewertet.

Beim Betrieb des Stellungsmesssystems wird bevorzugt mit einem endseitig mit dem Führstab verbundenem Magnetelement ein Magnetfeld erzeugt, und es wird mit einem mit dem Führsystem verbundenem Sensorelement ein Magnetfeld detektiert.

Dabei wird zweckdienlicherweisedurch die Steuereinheit eine primäre Wechselspannung erzeugt, wird die Wechselspannung in die Schaltungsanordnung eingespeist, wird in einer Induktionsspule eine Induktionsspannung erzeugt, wird mit der Steuereinheit der ohmsche Widerstand der Schaltungsanordnung ermittelt, wird mit einem Kontaktsensor durch ein Magnetfeld am Ort des Kontaktsensors eine Schaltungsschleife elektrisch kontaktschlüssig geschlossen, und wird mit der Steuereinheit eine Veränderung des Gleichspannungsanteils einer Gesamtspannung in der Schaltungsanordnung ermittelt.

Die mit der Erfindung erzielten Vorteile bestehen insbesondere darin, ein zu bislang gebräuchlichen Messsystemen diversitäres Messsystem für die Stabstellungsermittlung in einem Kernreaktor anzugeben, das durch die Mehrfachverwendung vorhandener Signalübertragungswege mit einer besonders geringen Anzahl von Leitungen und Containmentdurchführungen auskommt, und das insbesondere bei der Verwendung von Reed-Kontakten oder -Sensoren besonders robust und zugleich genau und zuverlässig arbeitet.

Nachfolgend wird ein Ausführungsbeispiel eines erfindungsgemäßen Stellungsmesssystems dargestellt.

Dabei zeigen jeweils in stark vereinfachten, schematischen Darstellungen:
- FIG. 1: ein Stellungsmesssystem zur Erfassung einer Extremalposition xₘᵢₙ, xₘₐₓ eines Steuerstabes,
- FIG. 2: das Stellungsmesssystem nach FIG. 1 mit eingezeichneten magnetischen Feldlinien eines am Steuerstab angebrachten Permanentmagneten,
- FIG. 3: eine Teilansicht des Stellungsmesssystems nach FIG. 1 mit einer Steuereinheit und mit einer ersten und einer zweiten dazugehörigen Schaltungsanordnung, und
- FIG. 4: eine Detailansicht eines Teilbereichs der Steuereinheit sowie der ersten dazugehörigen Schaltungsanordnung.

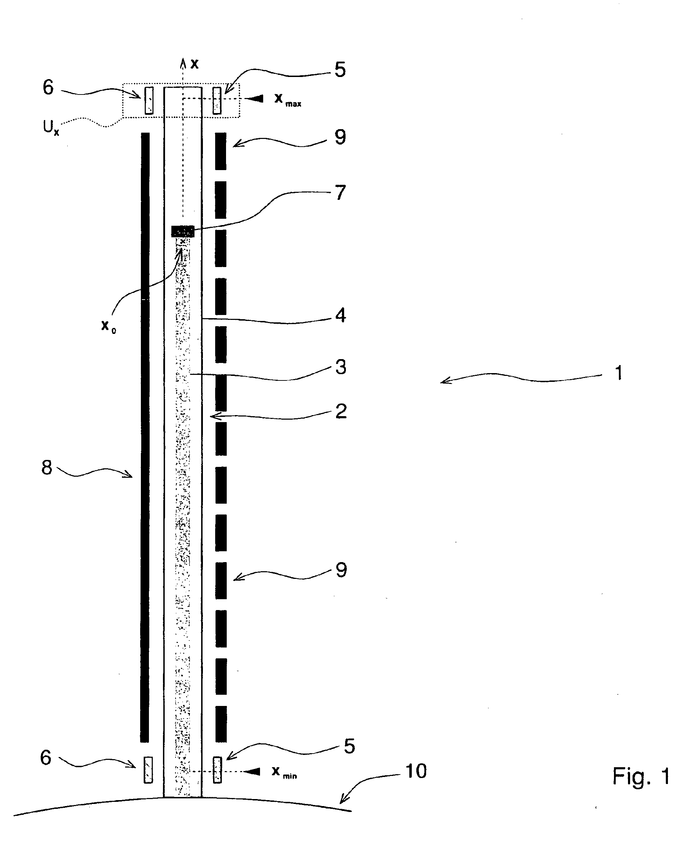

Einander entsprechende Teile in FIG. 1 bis FIG. 4 sind mit identischen Bezugszeichen versehen.

FIG. 1 zeigt ein Stellungsmesssystem 1 zur Erfassung einer Extremalposition xₘᵢₙ, xₘₐₓ eines zwischen einer minimalen Ausfahrposition xₘᵢₙ und einer maximalen Ausfahrposition xₘₐₓ bezüglich eines ortsfesten Führsystems 2 entlang des geradlinigen Weges x linear verfahrbaren Steuerstabes 3. Die Position des Steuerstabes 3 ist dabei mit der Koordinate eines Referenzpunktes x₀ bezüglich des geradlinigen Weges x identifiziert. Der Referenzpunkt x₀ liegt an der Endseite des Steuerstabes 3 und kennzeichnet diese. Das Führsystem 2 umfasst ein druckstabiles Führungsrohr 4, welches den Steuerstab 3 ummantelt. Im Bereich der minimalen und der maximalen Ausfahrposition xₘᵢₙ bzw. xₘₐₓ sind jeweils ein erstes Reed-Kontaktelement 5, sowie ergänzend ein zweites Reed-Kontaktelement 6 angeordnet. Beide Reed-Kontaktelemente 5 und 6 liegen in einer Umgebung Uₓ des geradlinigen Weges x. Im Bereich des Referenzpunktes x₀ ist auf dem Steuerstab 3 ein Permanentmagnet 7 angeordnet. In der minimalen Ausfahrposition xₘᵢₙ des Steuerstabes 3 liegt der Referenzpunkt x₀ bei xₘᵢₙ und in der maximalen Ausfahrposition xₘₐₓ des Steuerstabes 3 liegt der Referenzpunkt x₀ bei xₘₐₓ. In beiden Fällen bilden die Reed-Kontaktelemente 5 und 6 durch das Magnetfeld des Permanentmagneten einen elektrischen Kontaktschluss aus. Weiterhin sichtbar ist eine mit dem Stellungsmesssystem 1 verbundene Druckwand 10 eines kerntechnischen Reaktors.

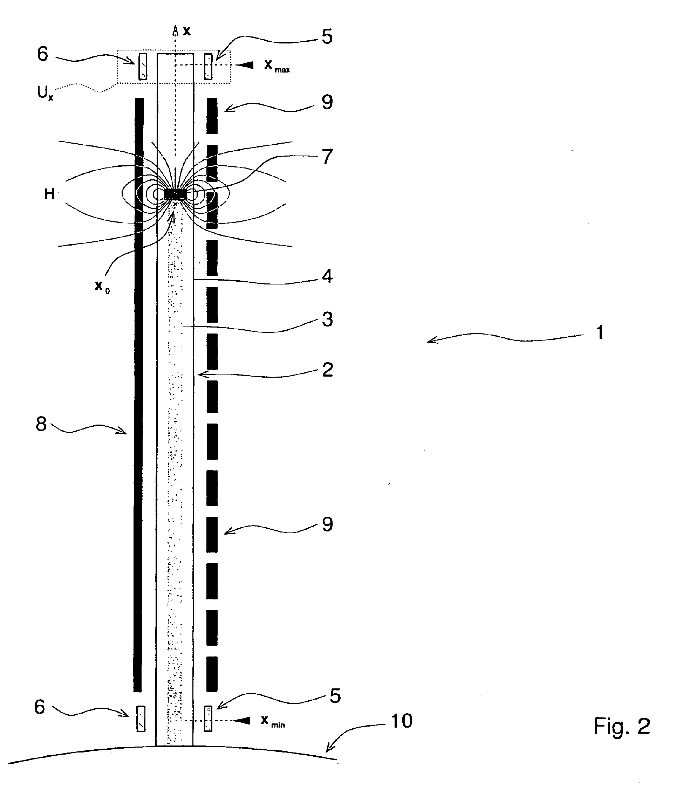

Parallel zu dem Führungsrohr 4 ist eine elektrische Spule 8 angeordnet, welche zur Bildung eines magnetischen Wechselfeldes eingerichtet ist, wobei das magnetische Wechselfeld einem induktiven Messvorgang dient. Die Spule 8 wird auch als felderzeugende Primärspule bezeichnet. Weiterhin ist eine Mehrzahl von Induktionsspulen 9, die auch als Sekundärspulen bezeichnet werden, parallel zu dem Führungsrohr 4 angeordnet, in welchen aus einem magnetischen Wechselfeld jeweils ein elektrisches Spannungssignal induziert wird. Das System der Spulen 8 und 9 dient in bekannter Weise zur Positionsermittlung des Steuerstabes 3 auf seinem Fahrweg in Richtung x für eine Anzahl von zwischen den Extremalpositionen xₘᵢₙ, xₘₐₓ liegenden Zwischenpositionen und gegebenenfalls auch für die Extremalpositionen xₘᵢₙ, xₘₐₓ selber. Die Anzahl der entlang Richtung x hintereinander angeordneten Induktionsspulen 9 bestimmt dabei die räumliche Auflösung der Stellungsmessung. Die Endlagenüberwachung hingegen wird in diversitär-redundanter Weise oder auch ausschließlich oder primär von den Reed-Kontaktelementen 5 sowie gegebenenfalls durch die redundanten Reed-Kontaktelemente 6 übernommen. Zur Minimierung der notwendigen Leitungen sind die Reed-Kontaktelemente 5 dabei in spezifischer Weise in den Spulenstromkreis der Induktionsspulen 9 geschaltet und mit einer geeigneten Auswerte- und/oder Steuereinheit 11 verbunden, wie anhand der nachfolgenden Beschreibung deutlich wird. Zur Vereinfachung der Beschreibung wird dabei nur eine einzige Induktionsspule 9 betrachtet. Die Verallgemeinerung auf mehrere, beispielsweise elektrisch in Reihe geschaltete Induktionsspulen wie in FIG. 1 oder 2 ist aber ohne weiteres möglich.

FIG. 2 zeigt das Stellungsmesssystem 1 nach FIG. 1 mit dem Verlauf der Feldlinien des Magnetfeldes H des Permanentmagneten 7. Alle weiteren Details sind identisch zu den Details in FIG. 1.

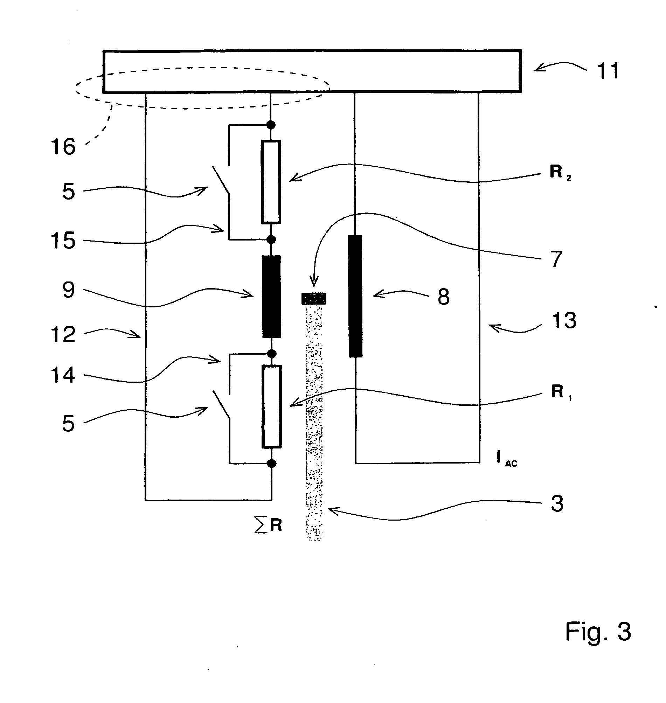

In FIG. 3 ist eine Teilansicht des Stellungsmesssystems 1 nach FIG. 1 mit einer Steuereinheit 11 und mit einer ersten und einer zweiten dazugehörigen Schaltungsanordnung 12 bzw. 13 dargestellt. Zwischen beiden Schaltungsanordnungen 12 und 13 ist der Steuerstab 3 mit dem endseitig mit ihm verbundenen Permanentmagneten 7 dargestellt, wobei die Anordnung des Steuerstabes 3 hier nur illustrierend ist und nicht einer realen geometrischen Anordnung entspricht. Die erste Schaltungsanordnung 12 umfasst eine Induktionsspule 9, die mit einer ersten ohmschen Widerstandseinheit R₁ und mit einer zweiten ohmschen Widerstandseinheit R₂ in Reihe geschaltet sind, wobei jeweils eine der Widerstandseinheiten R₁, R₂ mit jeweils einer Endseite der Induktionsspule 9 verbunden ist. Die erste ohmsche Widerstandseinheit R₁ und die zweite ohmsche Widerstandseinheit R₂ bilden mit jeweils einem Reed-Kontaktelement 5 eine erste bzw. zweite Schaltungsschleife 14 bzw. 15 aus. Je nachdem, welches der Reed-Kontaktelemente 5 offen oder geschlossen ist - was von der Position des Steuerstabes 3 abhängig ist, vergleiche FIG. 1 und FIG. 2 - ist im ersten Fall die Schaltungsschleife 14 offen und die Schaltungsschleife 15 geschlossen, ist im zweiten Fall die Schaltungsschleife 14 geschlossen und die Schaltungsschleife 15 offen, und sind im dritten Fall die erste Schaltungsschleife 14 offen und die Schaltungsschleife 15 offen.

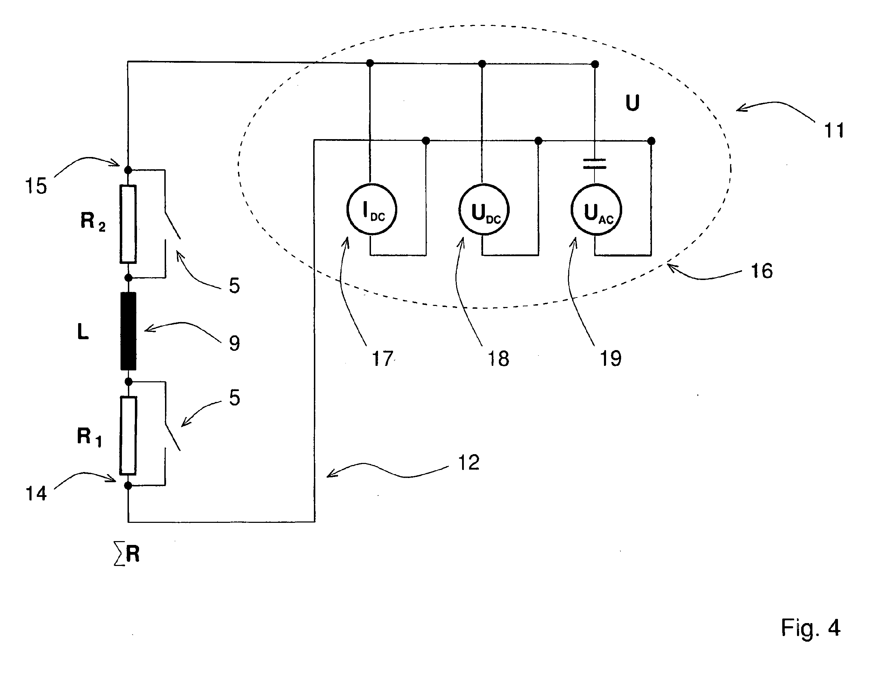

Entsprechen die dargestellten Reed-Kontaktelemente 5 denen in FIG. 1 und FIG. 2 für die Extremalpositionen des Steuerstabes 3, so kann zu einem gegebenen Zeitpunkt - je nach Stellung des Steuerstabes 3 - nur einer der Fälle realisiert sein. Im ersten Fall ist die Widerstandseinheit R₁ elektrisch kurzgeschlossen, im zweiten Fall ist die Widerstandseinheit R₂ elektrisch kurzgeschlossen, und im dritten Fall ist keine der Widerstandseinheiten R₁, R₂ elektrisch kurzgeschlossen, so dass der ohmsche Gesamtwiderstand ∑R der Reihenschaltung je nach Fall gegeben ist aus der Summe der ohmschen Widerstandswerte von der Induktionsspule 9 und der zweiten Widerstandseinheit R₂ bzw. der ersten Widerstandseinheit R₁ bzw. der ersten und zweiten Widerstandseinheit R₁ und R₂. Sind insbesondere die ohmschen Widerstandwerte der beiden ohmschen Widerstandseinheiten R₁, R₂ verschieden voneinander gewählt, so ist der Wert der Widerstandssumme ∑R für alle Fälle verschiedenen voneinander. Die Steuereinheit 11 weist eine Schaltungsgruppe 16 zur Ermittlung des Wertes der Widerstandssumme ∑R auf, vergleiche FIG. 4.

Die zweite Schaltungsanordnung 13 umfasst die elektrische Spule 8, die mittels eines von der Steuereinheit 11 gebildeten elektrischen Wechselstromes I_{AC} zur Bereitstellung eines magnetischen Wechselfeldes ausgebildet ist. Ein magnetisches Wechselfeld induziert eine Wechselspannung in der Induktionsspule 9, die in der Schaltungsgruppe 16 ausgewertet werden kann, vergleiche FIG. 4.

FIG. 4 zeigt eine Detailansicht der Schaltungsgruppe 16, die der Steuereinheit 11 zugeordnet ist, und die mit der ersten Schaltungsanordnung 12 verbunden ist, vergleiche FIG. 3. Die Schaltungsgruppe 16 umfasst eine Stromquelle 17 zur Bereitstellung eines Gleichstroms I_{DC} in der Schaltungsanordnung 12, eine erste Messeinheit 18 zur Erfassung des Gleichspannungsanteils U_{DC} der in der Schaltungsanordnung 12 vorliegenden Gesamtspannung U, und eine zweite Messeinheit 19 zur Erfassung des Wechselspannungsanteils U_{AC} der in der Schaltungsanordnung 12 vorliegenden Gesamtspannung U. Die weiteren Details entsprechen den Details in FIG. 3. Die Induktivität L der Induktionsspule 9 ist gesondert gekennzeichnet. Mit Hilfe der Stromquelle und der ersten Messeinheit 18 wird der ohmsche Gesamtwiderstand ∑R der Schaltungsanordnung 12 ermittelt. Daraus lässt sich wie oben geschildert zuverlässig das Erreichen der Endlagen xₘᵢₙ, xₘₐₓ detektieren. Mit Hilfe der zweiten Messeinheit 19 wird die Wechselspannung U_{AC}, die in der Induktivität L induziert wird, ermittelt. Damit lässt (lassen) sich auch die die durch die Anordnung der Induktionsspule(n) 9 festgelegte(n) Zwischenposition(en) zwischen den beiden Endlagen xₘᵢₙ, xₘₐₓ überwachen.

Durch die Einbindung der Reed-Kontaktelemente 5 in den Spulenstromkreis der ersten Schaltungsanordnung 12 und die damit bewerkstelligte Mehrfachverwendung bereits vorhandener Signalübertragungswege werden separate Leitungen für die als Endlagenschalter bzw. Endlagendetektoren wirksamen Reed-Kontaktelemente 5 eingespart. Man kann auch sagen, dass das an sich bekannte induktive Positionsermittlungssystem mit den Spulen 8 und 9 auf diese Weise ohne Vergrößerung der Leitungsanzahl um ein diversitäres, d. h. auf einem anderen Funktionsprinzip beruhendes Endlagenmesssystem erweitert wird. Anstelle der Endlagen xₘᵢₙ, xₘₐₓ könnten selbstverständlich auch andere ausgezeichnete Positionen mit Hilfe der Reed-Kontaktelemente 5 überwacht werden. Anstelle der Reed-Kontaktelemente 5, 6 könnten auch andere Endlagenschalter oder -sensoren zum Einsatz kommen, die die Widerstandseinheiten R₁, R₂ bedarfsweise und abhängig von der Position des Steuerstabes 3 elektrisch zu überbrücken.

Es versteht sich, dass die Schaltbilder schematischer Natur sind, und dass die entsprechende Elektronik in der Praxis zusätzliche Komponenten aufweisen würden, die aber für das hier interessierende Funktionsprinzip nicht von ausschlaggebender Bedeutung sind.

### Bezugszeichenliste

- 1: Stellungsmesssystem
- 2: Führsystem
- 3: Führstab, Steuerstab
- 4: Führungsrohr
- 5: Sensorelement, Kontaktsensor, Reed-Kontaktelement
- 6: Reed-Kontaktelement
- 7: Magnetelement, Permanentmagnet
- 8: elektrische Spule
- 9: Induktionsspule
- 10: Druckwand
- 11: Steuereinheit
- 12: erste Schaltungsanordnung
- 13: zweite Schaltungsanordnung
- 14: erste Schaltungsschleife
- 15: zweite Schaltungsschleife
- 16: Schaltungsgruppe
- 17: Stromquelle
- 18: erste Messeinheit
- 19: zweite Messeinheit

- x: geradliniger Weg
- xₘᵢₙ: Extremalposition, minimale Ausfahrposition
- xₘₐₓ: Extremalposition, maximale Ausfahrposition
- x₀: Referenzpunkt
- Uₓ: Umgebung des geradlinigen Weges
- H: Magnetfeld
- R₁: erste ohmsche Widerstandseinheit
- R₂: zweite ohmsche Widerstandseinheit
- ∑R: Gesamtwiderstand, Widerstandssumme
- I_{AC}: Wechselstrom
- I_{DC}: Gleichstrom

- U: Gesamtspannung
- U_{AC}: Wechselspannung, Wechselspannungsanteil
- U_{DC}: Gleichspannung, Gleichspannungsanteil
- L: Induktivität

## Patentansprüche

1. Stellungsmesssystem (1) zur Erfassung einer ausgezeichneten Position (xₘᵢₙ, xₘₐₓ) eines bezüglich eines Führsystems (2) entlang eines geradlinigen Weges (x) ausgedehnten und entlang des geradlinigen Weges (x) bewegbaren Führstabes (3), mit einer Anzahl von Reed-Kontaktelementen (5) und mit mindestens einem Magnetelement (7), wobei
• das Magnetelement (7) zur Bildung eines magnetischen Feldes (H) eingerichtet ist,
• das Magnetelement (7) mit dem Führstab (3) verbunden ist,
• das oder jedes Reed-Kontaktelement (5) jeweils innerhalb eines Detektionsbereiches zur Detektion eines magnetischen Feldes (H), dessen Feldstärke am Ort des Reed-Kontaktelementes (5) größer ist als ein vordefinierter Schwellwert, ausgebildet ist, und
• mindestens ein Reed-Kontaktelement (5) mit dem Führsystem (2) verbunden und in einer Umgebung (Uₓ) des Weges (x) angeordnet ist,
wobei ferner ein induktives Messsystem zur Positionsermittlung des Führstabes (3) vorhanden ist, das eine Anzahl von elektrischen Induktionsspulen (9) aufweist, und wobei eine Schaltungsanordnung (12) vorhanden ist, die mindestens eine ohmsche Widerstandseinheit (R₁ R₂) umfasst,
• die mit mindestens einer der Induktionsspulen (9) eine Reihenschaltung (12) ausbildet, und
• die mit mindestens einem der Reed-Kontaktelemente (5) eine Schaltungsschleife (14, 15) ausbildet, wobei die Schaltungsschleife (14, 15) die ohmsche Widerstandseinheit (R₁ R₂) bei geschlossenem Reed-Kontaktelement (5) überbrückt und somit kurzschließt.

2. Stellungsmesssystem (1) nach Anspruch 1, wobei das Magnetelement (7) als ein Permanentmagnet ausgebildet ist.

3. Stellungsmesssystem (1) nach Anspruch 1 oder 2, wobei das Magnetelement (7) mit dem Führstab (3) endseitig verbunden ist

4. Stellungsmesssystem (1) nach einem der Ansprüche 1 bis 3, wobei der Detektionsbereich mindestens eines Reed-Kontaktelementes (5) den in der ausgezeichneten Position (xₘᵢₙ, xₘₐₓ) angeordneten Führstab (3) endseitig erfasst.

5. Stellungsmesssystem (1) nach einem der Ansprüche 1 bis 4, wobei der Führstab (3) zwischen einer minimalen Ausfahrposition (xₘᵢₙ) und einer maximalen Ausfahrposition (xₘₐₓ) bewegbar ist.

6. Stellungsmesssystem (1) nach einem der Ansprüche 1 bis 5, wobei die Schaltungsanordnung (12)
• zwei ohmsche Widerstandseinheiten (R₁, R₂) umfasst, die mit einer Induktionsspule (9) eine Reihenschaltung (12) ausbilden, wobei jeweils eine der beiden ohmschen Widerstandseinheiten (R₁ R₂) mit jeweils einer Endseite der Induktionsspule (9) verbunden ist, und
• eine Mehrzahl von Reed-Kontaktelementen (5) umfasst, wobei jedes Reed-Kontaktelement (5) mit einem der ohmschen Widerstandseinheiten (R₁ R₂) eine Schaltungsschleife (14, 15) ausbildet.

7. Stellungsmesssystem (1) nach einem der Ansprüche 1 bis 6 mit einer Schaltungsgruppe (16) zur Bestimmung des ohmschens Gesamtwiderstandes (∑R) der Schaltungsanordnung (12).

8. Stellungsmesssystem (1) nach einem der Ansprüche 1 bis 7 mit einer Steuereinheit (11), die
• eine Stromquelle (17) zur Einspeisung eines Gleichstroms (I_{DC}) in die Schaltungsanordnung (12), und
• eine erste Messeinheit (18) zur Erfassung des Gleichspannungsanteils (U_{DC}) einer Gesamtspannung (U) in der Schaltungsanordnung (12), und
• eine zweite Messeinheit (19) zur Erfassung des Wechselspannungsanteils (U_{AC}) einer Gesamtspannung (U) in der Schaltungsanordnung (12) umfasst.

9. Stellungsmesssystem (1) nach Anspruch 8, wobei die Steuereinheit (11)
• mit einer zweiten Schaltungsanordnung (13) verbunden ist, welche Schaltungsanordnung (13) eine elektrische Spule (8) umfasst, und
• zur Bildung und Steuerung eines elektrischen Stromes (I_{AC}) in der Schaltungsanordnung (13) ausgebildet ist.

10. Stellungsmesssystem (1) nach Anspruch 9, wobei die elektrische Spule (8) parallel zu dem geradlinigen Weg (x) ausgerichtet und angeordnet ist.

11. Stellungsmesssystem (1) nach einem der Ansprüche 1 bis 10, wobei
• der Führstab (3) als ein Steuerstab (3) einer kerntechnischen Anlage gegeben ist, und
• das Führsystem (2) ein den Steuerstab (3) umschließendes druckstabiles Führungsrohr (4) umfasst.

## Claims

1. A position measuring system (1) for detecting an distinct position (xₘᵢₙ, xₘₐₓ) of a guide rod (3) which extends along a straight-line path (x) and is movable along the straight-line path (x), relative to a guide system (2), having a plurality of reed contact elements (5) and having at least one magnetic element (7), wherein
• the magnetic element (7) is adapted for forming a magnetic field (H),
• the magnetic element (7) is connected with the guide rod (3),
• the or each reed contact element (5) is configured within a detection range for detecting a magnetic field (H), whose field strength is at the place of the reed contact element (5) larger than a predefined threshold value, and
• at least one reed contact element (5) is connected with the guide system (2) and arranged in an environment (Uₓ) of the path (x),
wherein, furthermore, an inductive measuring system is present for determining the position of the guide rod (3), which inductive measuring system includes a plurality of electrical induction coils (9), and wherein a circuit arrangement (12) is configured which comprises at least one ohmic resistor unit (R₁ R₂),
• which forms a series circuit (12) with at least one of the induction coils (9), and
• which forms a circuit loop (14, 15) with at least one of the reed contact elements (5), the circuit loop (14, 15) bridging, and thus short-circuiting, the ohmic resistor unit (R₁ R₂) when the reed contact element (5) is closed.

2. The position measuring system (1) of claim 1, wherein the magnetic element (7) is designed as a permanent magnet.

3. The position measuring system (1) of claim 1 or 2, wherein the magnetic element (7) is connected with the guide rod (3) on the end side.

4. The position measuring system (1) of any of claims 1 to 3, wherein the detection range of at least one reed contact element (5) detects the guide rod (3) arranged in the distinct position (xₘᵢₙ, xₘₐₓ) on the end side.

5. The position measuring system (1) of any of claims 1 to 4, wherein the guide rod (3) is movable between a minimum extended position (xₘᵢₙ) and a maximum extended position (xₘₐₓ).

6. The position measuring system (1) of any of claims 1 to 5, wherein the circuit arrangement (12)
• comprises two ohmic resistor units (R₁, R₂), which form a series circuit (12) with an induction coil (9), one of two ohmic resistor units (R₁, R₂) being connected in each case with one end side of the induction coil (9), and
• comprises a plurality of reed contact elements (5), each reed contact element (5) forming a circuit loop (14, 15) with one of the ohmic resistor units (R₁, R₂).

7. The position measuring system (1) of any of claims 1 to 6, having a circuit group (16) for determining the ohmic total resistance (∑R) of the circuit arrangement (12).

8. The position measuring system (1) of any of claims 1 to 7, having a control unit (11) which comprises
• a power source (17) for feeding a direct current (I_{DC}) into the circuit arrangement (12) and
• a first measuring unit (18) for detecting the direct-voltage share (U_{DC}) of a total voltage (U) in the circuit arrangement (12) and
• a second measuring unit (19) for detecting the alternating-voltage share (U_{AC}) of a total voltage (U) in the circuit arrangement (12).

9. The position measuring system (1) of claim 8, wherein the control unit (11)
• is connected with a second circuit arrangement (13), which comprises an electrical coil (8), and
• is configured for generating and controlling an electrical current (I_{AC}) in the circuit arrangement (13).

10. The position measuring system (1) of claim 9, wherein the electrical coil (8) is aligned and arranged in parallel to the straight-line path (x).

11. The position measuring system (1) of any of claims 1 to 10, wherein
• the guide rod (3) is given as a control rod (3) of a nuclear facility and
• the guide system (2) comprises a pressure-stable guide tube (4) enclosing the control rod (3).

## Revendications

1. Système de mesurage de position (1) pour détecter une position distinguée (xₘᵢₙ, xₘₐₓ) d'une barre de guidage (3) qui s'étend le long d'un chemin rectiligne (x) et est mobile le long du chemin rectiligne (x), relativement à un système de guidage (2), ayant une pluralité d'éléments de contact Reed (5) et ayant au moins un élément magnétique (7), dans lequel
• l'élément magnétique (7) est adapté à former un champ magnétique (H),
• l'élément magnétique (7) est relié avec la barre de guidage (3),
• le ou chaque élément de contact Reed (5) est étudié à l'intérieur d'une gamme de détection pour détecter un champ magnétique (H), dont l'intensité de champ, à la place de l'élément de contact Reed (5), est plus grande qu'une valeur seuil prédéfinie, et
• au moins un élément de contact Reed (5) est relié avec le système de guidage (2) et disposé dans des environs (Uₓ) du chemin (x),
dans lequel, en outre, un système de mesurage inductif est présent pour déterminer la position de la barre de guidage (3), qui comprend une pluralité de bobines d'inductance électriques (9), et dans lequel un aménagement de circuits (12) est étudié qui comprend au moins une unité de résistance (R₁, R₂) ohmique
• qui forme un couplage en série (12) avec au moins une des bobines d'inductance (9), et
• qui forme une boucle de couplage (14, 15) avec au moins un des éléments de contact Reed (5), la boucle de couplage (14, 15) pontant et ainsi court-circuitant l'unité de résistance (R₁, R₂) ohmique lorsque l'élément de contact Reed (5) est fermé.

2. Système de mesurage de position (1) selon la revendication 1, dans lequel l'élément magnétique (7) est étudié comme aimant permanent.

3. Système de mesurage de position (1) selon la revendication 1 ou 2, dans lequel l'élément magnétique (7) est relié avec la barre de guidage (3) du côté du bout.

4. Système de mesurage de position (1) selon l'une quelconque des revendications 1 à 3, dans lequel la gamme de détection d'au moins un élément de contact Reed (5) détecte la barre de guidage (3) disposée dans la position distinguée (xₘᵢₙ, xₘₐₓ) du côté du bout.

5. Système de mesurage de position (1) selon l'une quelconque des revendications 1 à 4, dans lequel la barre de guidage (3) est mobile entre une position sortie minimale (xₘᵢₙ) et une position sortie maximale (xₘₐₓ).

6. Système de mesurage de position (1) selon l'une quelconque des revendications 1 à 5, dans lequel l'aménagement de circuits (12)
• comprend deux unités de résistance (R₁, R₂) ohmiques, qui forment un couplage en série (12) avec une bobine d'inductance (9), une des deux unités de résistance (R₁, R₂) ohmiques étant reliée à chaque fois avec un côté du bout de la bobine d'inductance (9), et
• comprend une pluralité d'éléments de contact Reed (5), chaque élément de contact Reed (5) formant une boucle de couplage (14, 15) avec une des unités de résistance (R₁, R₂) ohmiques.

7. Système de mesurage de position (1) selon l'une quelconque des revendications 1 à 6, ayant un groupe de circuits (16) pour déterminer la résistance ohmique totale (∑R) de l'aménagement de circuits (12).

8. Système de mesurage de position (1) selon l'une quelconque des revendications 1 à 7, ayant une unité de commande (11) qui comprend
• une source de courant (17) pour alimenter un courant continu (I_{DC}) dans l'aménagement de circuits (12) et
• une première unité de mesurage (18) pour détecter la part de tension continue (U_{DC}) d'une tension totale (U) dans l'aménagement de circuits (12) et
• une seconde unité de mesurage (19) pour détecter la part de tension alternative (U_{AC}) d'une tension totale (U) dans l'aménagement de circuits (12).

9. Système de mesurage de position (1) selon la revendication 8, dans lequel l'unité de commande (11)
• est reliée avec un second aménagement de circuits (13) qui comprend une bobine électrique (8) et
• est étudiée pour générer et commander un courant électrique (I_{AC}) dans l'aménagement de circuits (13).

10. Système de mesurage de position (1) selon la revendication 9, dans lequel la bobine électrique (8) est alignée et disposée en parallèle avec le chemin rectiligne (x).

11. Système de mesurage de position (1) selon l'une quelconque des revendications 1 à 10, dans lequel
• la barre de guidage (3) est donnée comme une barre de commande (3) d'une installation nucléaire et
• le système de guidage (2) comprend un tube de guidage (4) résistant à la pression, enfermant la barre de commande (3).
